# EUROPÄISCHE PATENTANMELDUNG

(11) **EP 0 980 170 A2**
(43) Veröffentlichungstag der Anmeldung: **16.02.2000**
(21) Anmeldenummer: 99113876.9
(22) Anmeldetag: 16.07.1999
(51) Int. Cl.: H04M 1/02

(54) **Türanlage, insbesondere Türsprechanlage**

(30) Priorität: 12.08.1998 DE 19836457
(71) Anmelder: Ritto - Werk Loh GmbH & Co. KG, 35708 Haiger (DE)
(72) Erfinder: Achenbach, Heinz, 35236 Breidenbach (DE)
(74) Vertreter: Fleck, Hermann-Josef, Dr.-Ing.

(57) **Zusammenfassung**

Die Erfindung betrifft eine Türanlage, insbesondere Türsprechanlage, mit einem Gehäuse mit einem Aufnahmeraum für mehrere Funktionseinheiten mit rechteckiger Außenkontur, die in einer Zeile oder Spalte nebeneinander in den Aufnahmeraum des Gehäuses mittels aufeinander abgestimmter Verbindungs- und Gegenverbindungselemente einsetzbar und darin gehalten sind, wobei das Gehäuse mit Rastschienen zum Aufrasten von Aufnahmegehäusen für die Funktionseinheiten versehen ist und wobei die Funktionseinheiten in die im Gehäuse festgelegten Aufnahmegehäuse mittels lösbarer Rastverbindungen einrastbar und aus den Aufnahmegehäusen wieder lösbar sind. Der Teile- und Montageaufwand wird dadurch vereinfacht und reduziert, dass das Gehäuse einen im Querschnitt U-förmigen Profilabschnitt (10) mit Befestigungsplatte (11) und zwei Gehäuse-Seitenwände (12, 13) aufweist, der sich über die Zeile oder Spalte der Funktionseinheit erstreckt und dessen offene Seiten mittels zweier Seitenteile verschließbar sind, dass zumindest an den Gehäuse-Seitenwänden (12, 13) Rastschienen (14) für die Aufnahmegehäuse (20) angeformt sind, die zum Aufnahmeraum des Profilabschnittes (10) gerichtet sind, und dass die Gehäuse-Seitenwände (12, 13) und die abschließenden Seitenteile einen um die in die Aufnahmegehäuse (20) eingerasteten Funktionseinheiten (30) verlaufenden und den Aufnahmeraum begrenzenden Rahmen bilden.

## Beschreibung

Die Erfindung betrifft eine Türanlage, insbesondere Türsprechanlage, mit einem Gehäuse mit einem Aufnahmeraum für mehrere Funktionseinheiten mit rechteckiger Außenkontur, die in einer Zeile oder Spalte nebeneinander in den Aufnahmeraum des Gehäuses mittels aufeinander abgestimmter Verbindungs- und Gegenverbindungselemente einsetzbar und darin gehalten sind, wobei das Gehäuse mit Rastschienen zum Aufrasten von Aufnahmegehäusen für die Funktionseinheiten versehen ist und wobei die Funktionseinheiten in die im Gehäuse festgelegten Aufnahmegehäuse mittels lösbarer Rastverbindungen einrastbar und aus den Aufnahmegehäusen wieder lösbar sind.

Eine derartige Türanlage ist aus der DE 43 12 834 C1 bekannt. Das Gehäuse dieser bekannten Türanlage umfaßt eine Grundplatte, die an allen Umfangsseiten mit Rahmenteilen verbunden wird, die mittels Eckverbinder zu einem den Aufnahmeraum umschließenden Rahmen vereinigt sind. An den Rahmenteilen sind die Rastschienen angeformt.

Dieser Gehäuseaufbau ist vom Teile- und Montageaufwand sehr kompliziert und aufwendig. Darüber hinaus kann er nicht auf einfache Weise auf ein Rasterfeld mit mehreren Zeilen und/oder Spalten von Aufnahmegehäusen und Funktionseinheiten ausgelegt werden.

Es ist Aufgabe der Erfindung, bei einer Türanlage der eingangs erwähnten Art den Gehäuseaufbau im Teile- und Montageaufwand zu vereinfachen, so dass dadurch das Einsetzen und Austauschen von Funktionseinheiten erschwert wird und die Möglichkeit besteht, das Gehäuse auch für mehrere Zeilen und Spalten von Funktionseinheiten auslegen zu können.

Diese Aufgabe wird nach der Erfindung dadurch gelöst, dass das Gehäuse einen im Querschnitt U-förmigen Profilabschnitt mit Befestigungsplatte und zwei Gehäuse-Seitenwände aufweist, der sich über die Zeile oder Spalte der Funktionseinheit erstreckt und dessen offene Seiten mittels zweier Seitenteile verschließbar sind, dass zumindest an den Gehäuse-Seitenwänden Rastschienen für die Aufnahmegehäuse angeformt sind, die zum Aufnahmeraum des Profilabschnittes gerichtet sind, und dass die Gehäuse-Seitenwände und die abschließenden Seitenteile einen um die in die Aufnahmegehäuse eingerasteten Funktionseinheiten verlaufenden und den Aufnahmeraum begrenzenden Rahmen bilden.

Der Profilabschnitt und die beiden Seitenteile können als Gehäuse mit geschlossenem Aufnahmeraum vormontiert werden. In den Aufnahmeraum werden die Aufnahmegehäuse eingerastet und verdrahtet. Die in die Aufnahmegehäuse eingesetzten Funktionseinheiten werden in bekannter Weise über Steckverbindungen elektrisch angeschlossen. Die Rastverbindung zwischen Funktionseinheit und Aufnahmegehäuse ist durch Verstellen der Rastelemente wieder lösbar, so dass die Funktionseinheit über die Frontseite aus dem Gehäuse lösbar ist und zwar auch aus einem Verbund der Funktionseinheiten in einem Rasterfeld. Das Rasterfeld läßt sich dabei bei gleichem Teile- und Montageaufwand dadurch realisieren, dass der Aufnahmeraum des Profilabschnittes für mehrere Zeilen oder Spalten von Funktionseinheiten und Aufnahmgehäusen mittels an der Befestigungsplatte angeformter Verbindungsstege unterteilt ist, und dass die Verbindungsstege den benachbarten Zeilen oder Spalten zugekehrt mit gleichen Rastschienen wie die Gehäuse-Seitenwände des Profilabschnittes versehen sind.

Damit unter Beibehaltung der vertikalen Ausrichtung der Funktionseinheiten der Profilabschnitt in Zeilen- oder Spaltenrichtung, d.h. horizontal oder vertikal, ausgerichtet werden kann, sieht die Erfindung vor, dass das Aufnahmegehäuse an allen Außenseiten mit Rastelementen versehen ist und so in zwei um 90° verdrehten Stellungen mit den Rastschienen des Profilabschnittes verrastbar ist, oder dass die Funktionseinheiten allseitig mit verstellbaren Rastelementen versehen sind und so in zwei um 90° verdrehten Stellungen mit den Aufnahmegehäusen verrastbar und von diesen wieder lösbar sind.

Ist nach einer weiteren Ausgestaltung vorgesehen, dass die Gehäuse-Seitenwände mit angeformten Schraubkanälen zum Anschrauben der Seitenteile versehen sind, dann können die Seitenteile schnell und einfach am Profilabschnitt angeschraubt werden. Dabei ist von Vorteil, wenn die Seitenteile im wesentlichen gleichen Querschnitt wie die Gehäuse-Seitenwände des Profilabschnittes aufweisen.

Damit das Gehäuse die Funktionseinheiten bündig aufnimmt, ist vorgesehen, dass sich der Profilabschnitt über ein ganzzahliges Vielfaches der durch die quadratische Außenkontur der Funktionseinheiten vorgegebenen Rasterteilung erstreckt und dass die Funktionseinheiten auf der Frontseite bündig mit den Gehäuse-Seitenwänden und den Seitenteilen abschließen.

Die Herstellung des Profilabschnittes wird dadurch erleichtert, dass die Gehäuse-Seitenwände des Profilabschnittes zumindest im Bereich der aufgenommenen Funktionseinheiten als Hohlprofile ausgebildet sind, die zur Befestigungsplatte hin einen Kabelaufnahmeraum freilassen, wobei für die Verlegung der Verbindungskabel und Anschlußkabel im Gehäuse ausreichend Platz geschaffen ist.

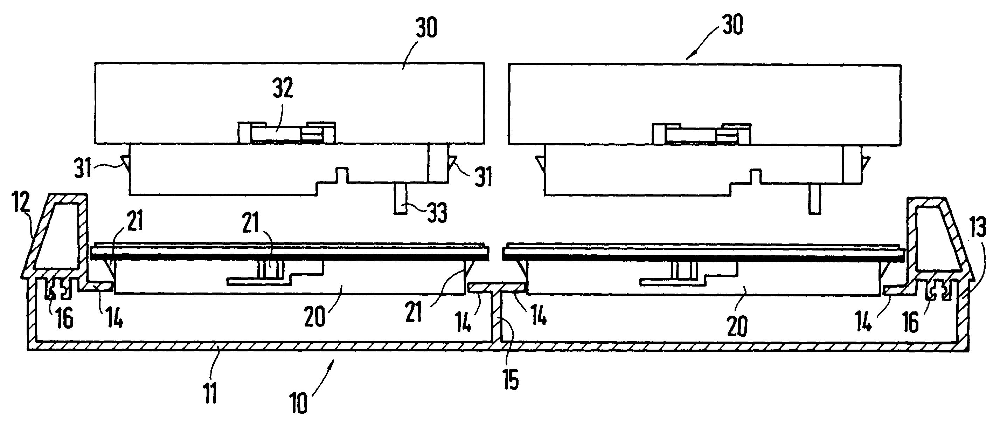

Die Erfindung wird anhand eines in der Zeichnung dargestellten Ausführungsbeispiels näher erläutert.

Die Zeichnung zeigt im Schnitt einen Profilabschnitt mit zwei Zeilen oder Spalten von Funktionseinheiten 30, die selbst wiederum in Aufnahmegehäuse 20 einrastbar sind, die in den Profilabschnitt 10 eingerastet sind.

Der Profilabschnitt 10 weist eine Grundplatte 11 auf, die an den beiden Längsseiten mit den angeformten Gehäuse-Seitenwänden 12 und 13 versehen ist. Der obere Teil der Gehäuse-Seitenwände 12 und 13 ist als Hohlprofil ausgebildet, das zur Grundplatte hin einen Kabelaufnahmeraum freiläßt und mit dem angeformten Schraubkanal 16 versehen ist. Die (nicht dargestellten) Seitenteile haben im wesentlichen den gleichen Querschnitt wie die Gehäuse-Seitenwände 12 und 13, an denen die zum Aufnahmeraum des Profilabschnittes 10 gerichteten Rastschienen 14 angeformt sind. Der Profilabschnitt 10 kann durch entsprechende Breite und Unterteilung mittels Verbindungsstegen 15 mit beidseitigen Rastschienen 14 auf mehrere Zeilen oder Spalten ausgelegt werden. Die Seitenteile haben dann eine entsprechende Länge, um die offenen Seiten des Profilabschnittes 10 zu verschließen. Die Aufnahmegehäuse 20 können mit allseitig angeordneten Rastelementen 21 auf die Rastschienen 14 aufgerastet werden. In diesem Fall kann das Aufnahmegehäuse 20 so ausgerichtet und im horizontal oder vertikal verlaufenden Profilabschnitt 10 festgelegt sein, dass die Funktionseinheit 10 nur in vertikaler Ausrichtung ensetzbar ist.

Die Funktionseinheit 10 kann allseitig angeordnete Rastelemente 31 tragen und selbst in zwei um 90° verdrehten Stellungen im Aufnahmegehäuse 20 einrastbar sein, so dass auch in diesem Fall eine vertikale Ausrichtung derselben gewährleistet ist, unabhängig davon, wie der Profilabschnitt 10 ausgerichtet ist.

Die Rastelemente 31 der Funktionseinheit 30 können mittels eines Verstellelementes 32 aus der Raststellung bewegt werden, das in der Funktionseinheit 30 untergebracht und von der Frontseite aus mittels Spezialwerkzeug betätigbar ist. Der elektrische Anschluß der Funktionseinheit 30 erfolgt über einen Stecker 33, der in eine entsprechende Steckbuchse im Aufnahmegehäuse 20 einführbar ist. Unterhalb des Aufnahmegehäuses 20 bietet das Gehäuse ausreichend Platz für Verbindungs- und Anschlußkabel.

Die Gehäuse-Seitenwände 12 und 13 sowie die (nicht dargestellten) abschließenden Seitenteile bilden mit den Frontseiten der eingesetzten Funktionseinheiten 30 eine gemeinsame Frontebene. Dabei sind die Funktionseinheiten 30 im Rasterfeld ohne Zwischenstege aneinandergereiht und umfangsseitig von einem Rahmen umschlossen.

## Patentansprüche

1. Türanlage, insbesondere Türsprechanlage, mit einem Gehäuse mit einem Aufnahmeraum für mehrere Funktionseinheiten mit rechteckiger Außenkontur, die in einer Zele oder Spalte nebeneinander in den Aufnahmeraum des Gehäuses mittels aufeinander abgestimmter Verbindungs- und Gegenverbindungselemente einsetzbar und darin gehalten sind, wobei das Gehäuse mit Rastschienen zum Aufrasten von Aufnahmegehäusen für die Funktionseinheiten versehen ist und wobei die Funktionseinheiten in die im Gehäuse festgelegten Aufnahmegehäuse mittels lösbarer Rastverbindungen einrastbar und aus den Aufnahmegehäusen wieder lösbar sind,
dadurch gekennzeichnet,
dass das Gehäuse einen im Querschnitt U-förmigen Profilabschnitt (10) mit Befestigungsplatte (11) und zwei Gehäuse-Seitenwände (12, 13) aufweist, der sich über die Zeile oder Spalte der Funktionseinheit erstreckt und dessen offene Seiten mittels zweier Seitenteile verschließbar sind, dass zumindest an den Gehäuse-Seitenwänden (12, 13) Rastschienen (14) für die Aufnahmegehäuse (20) angeformt sind, die zum Aufnahmeraum des Profilabschnittes (10) gerichtet sind, und
dass die Gehäuse-Seitenwände (12, 13) und die abschließenden Seitenteile einen um die in die Aufnahmegehäuse (20) eingerasteten Funktionseinheiten (30) verlaufenden und den Aufnahmeraum begrenzenden Rahmen bilden.

2. Türanlage nach Anspruch 1,
dadurch gekennzeichnet,
dass der Aufnahmeraum des Profilabschnittes (10) für mehrere Zeilen oder Spalten von Funktionseinheiten (30) und Aufnahmgehäusen (20) mittels an der Befestigungsplatte (11) angeformter Verbindungsstege (15) unterteilt ist, und
dass die Verbindungsstege (16) den benachbarten Zeilen oder Spalten zugekehrt mit gleichen Rastschienen (14) wie die Gehäuse-Seitenwände (12, 13) des Profilabschnittes (10) versehen sind.

3. Türanlage nach Anspruch 1 oder 2,
dadurch gekennzeichnet,
dass das Aufnahmegehäuse (20) an allen Außenseiten mit Rastelementen (21) versehen ist und so in zwei um 90° verdrehten Stellungen mit den Rastschienen (14) des Profilabschnittes (10) verrastbar ist.

4. Türanlage nach einem der Ansprüche 1 oder 2,
dadurch gekennzeichnet,
dass die Funktionseinheiten (30) allseitig mit verstellbaren Rastelementen (32) versehen sind und so in zwei um 90° verdrehten Stellungen mit den Aufnahmegehäusen (20) verrastbar und von diesen wieder lösbar sind.

5. Türanlage nach einem der Ansprüche 1 bis 4,
dadurch gekennzeichnet,
dass die Gehäuse-Seitenwände (12, 13) mit angeformten Schraubkanälen (16) zum Anschrauben der Seitenteile versehen sind.

6. Türanlage nach einem der Ansprüche 1 bis 5,
dadurch gekennzeichnet,
dass die Seitenteile im wesentlichen gleichen Querschnitt wie die Gehäuse-Seitenwände (12, 13) aufweisen.

7. Türanlage nach einem der Ansprüche 1 bis 6,
dadurch gekennzeichnet,
dass sich der Profilabschnitt (10) über ein ganzzahliges Vielfaches der durch die quadratische Außenkontur der Funktionseinheiten (30) vorgegebenen Rasterteilung erstreckt und
dass die Funktionseinheiten (30) auf der Frontseite bündig mit den Gehäuse-Seitenwänden (12, 13) und den Seitenteilen abschließen.

8. Türanlage nach einem der Ansprüche 1 bis 7,
dadurch gekennzeichnet,
daß die Gehäuse-Seitenwände (12, 13) des Profilabschnittes (10) zumindest im Bereich der aufgenommenen Funktionseinheiten (30) als Hohlprofile ausgebildet sind, die zur Befestigungsplatte (11) hin einen Kabelaufnahmeraum freilassen.
